# EUROPEAN PATENT SPECIFICATION

(11) **EP 3 316 729 B1**
(45) Date of publication and mention of the grant of the patent: **28.08.2019**
(21) Application number: 16732704.8
(22) Date of filing: 22.06.2016
(51) Int. Cl.: A45D 29/05

(54) **ELECTRICAL NAIL POLISHING APPARATUS**
ELEKTRISCHE NAGELPOLIERVORRICHTUNG
APPAREIL DE POLISSAGE D'ONGLE ÉLECTRIQUE

(30) Priority: 30.06.2015 GB 201511491
(43) Date of publication of application: 09.05.2018
(73) Proprietor: Reckitt Benckiser Health Limited, Slough Berkshire SL1 3UH (GB)
(72) Inventor: BUTLER, Martin, Kwun Tong Hong Kong (CN); JONES, Fiona, Slough Berkshire SL1 3UH (GB); MORGAN, Darren John, Slough Berkshire SL1 3UH (GB); PEL, Maartje Saskia, Warwick CV34 4AB (GB); PERRIN, Victoria Louise, Hull HU8 7DS (GB); TSANG, Jackie, Dongguan, PC 523009 (CN); WOOLLEY, Simon, Hull HU8 7DS (GB)
(74) Representative: Heritage, Kevin Stephen Charles
(86) International application number: PCT/GB2016/051863
(87) International publication number: WO 2017/001825

(56) References cited:
- DE-U1-202009 003 498
- JP-A- 2000 189 233
- JP-U- H0 663 262

## Description

The present invention relates to electrical nail polishing apparatus, and more particularly to an electrical nail polishing apparatus comprising a motorised electrical nail polishing device provided with a plurality of inter-changeable heads to impart at least one of a filing or abrasion effect to the surface of a nail, a buffing effect to the surface of a nail, or a polishing effect to the surface of a nail.

Electrical motorised nail polishing devices with interchangeable heads that can impart different effects in use are known. In operation a user would typically use the device as part of a three-stage process, firstly, the user would connect the filing head. The user would then activate the device and the motor causes the oscillating linear motion of the filing head and the user would apply the filing surface of the head to a finger nail or a toe nail to file the nail as required. The user would then deactivate the head and exchange the filing head for a separate buffing head. Similarly the user would then activate the device to cause oscillating linear motion of the buffing head and would apply this to the finger nail or toe nail as required. The user would then deactivate the head and exchange the buffing head for a separate polishing head. Lastly the user would then activate the device to cause oscillating linear motion of the polishing head and would apply this to the finger nail or toe nail as required and then deactivate the device. These known devices provide the oscillating linear motion at a high frequency to provide efficiency of use in filing/buffering/polishing the user's nail, one potential drawback is that due to the number of head changing operations required a user may inadvertently expose their nails to inaccurate filing/buffering/polishing should they incorrectly perform the head changing operation. The present invention seeks to address this and other drawbacks.

JPH0663262U also discloses a nail polishing device.

According to a first aspect of the present invention there is provided an electrical nail polishing apparatus comprising an electrical nail polishing device and a plurality of releasably connectable heads, wherein the electrical nail polishing device comprises: a main body housing accommodating a power source electrically connected to a motor with a rotating shaft connected to a transmission gearing mechanism connected to a proximal end of a drive shaft, the transmission gearing mechanism is configured to convert the rotational motion of the rotating shaft into oscillating longitudinal movement of the drive shaft, the remote end of the drive shaft extends beyond a tip end of the housing, the tip end of the housing is configured to extend away from the main body housing by at least 2mm to provide a face surface with a flat side at or adjacent a diameter line of the main body housing with the ends of the flat side being joined by a curved side having one or more radii;
and wherein the releasably connectable head comprises: a landing plate which has one side provided with a nail contact material and the other side of the landing plate is provided with a head housing inboard of the periphery of the landing plate, the head housing is closed at a top end and open at a base end and is provided with a cavity that accepts the remote end of the drive shaft and the tip end of the housing therein and wherein the cavity corresponds to the shape of the tip end, within the cavity a socket is provided that is configured to releasably connect to the drive shaft, and wherein a landing plane is provided at the base end of the landing plate by the cavity end of the head housing being located at least 2mm inboard from the base end of the landing plate.

The present invention offers numerous advantages over the prior art apparatuses, a principal advantage is the assurance that the releasably connectable head can only be attached to the drive shaft of the polishing device in a single orientation. The single orientation is facilitated by the landing plane of the landing plate which extends by at least 2mm from the head housing at the base of the landing plate. To correctly orientate and connect the releasably connectable head to the polishing device a user will push the head such that the cavity swallows the remote end of the drive shaft to surround the tip end of the device housing such that the landing plane is adjacent to the flat side of the of the tip end which in turn will permit the cavity of the head housing to accommodate the tip by virtue of it corresponding shape. In contrast, if a user did not correctly orientate the releasably connectable head to the tip end of the polishing device prior to connection the landing plane will abut a part of the tip end of the device and prevent connection therebetween.

A further advantage provided by the landing plane is the provision of a greater surface area of the landing plate thus increasing the surface area of the nail contact material which may allow for improved nail polishing results for the user.

A yet further advantage provided by the landing plane is that it permits a greater proportion of the tip to be surrounded by the head which may afford improved stability during use when the user is imparting perpendicular force on the connection between the releasably connectable head and the polishing device during the act of polishing finger nail or toe nail.

Preferably the landing plane extends beyond the cavity end of the head housing from between 2mm - 10mm, and more preferably extends from between 2mm - 7mm, and even more preferably extends from between 3mm - 6mm, and most preferably extends by 5mm.

The head housing of the releasably connectable head is provided with a cavity that accepts the remote end of the drive shaft and the tip end of the housing therein and corresponds to the shape of the tip end wherein the clearance between an interior of the cavity and the tip end of the polishing device is between 1mm - 5mm, and preferably between 1mm - 3mm, and most preferably between 1mm - 2mm.

The landing plate is preferably curved at its top end to facilitate more precise nail polishing.

The nail contact material preferably completely fills the surface area of the landing plate. The nail contact material may be a material that is suitable for imparting one of the following effects, namely; filing; buffing; or polishing.

The drive shaft protruding from the tip end of the housing may be provided with a collar, said collar being configured for releasable connection with the socket of the head housing, said releasable connection providing an audible click which may provide the user with confirmation that the correct connection has been made. Alternatively the drive shaft may be provided with a notch or the like removed therefrom and the socket of the head housing is configured for releasable connection with the notch, said releasable connection providing an audible click which may provide the user with confirmation that the correct connection has been made.

The tip end of the housing of the device preferably extends from the main body housing by between 2mm - 10mm, and more preferably extends by between 2mm - 7mm, and even more preferably extends by between 3mm - 6mm, and most preferably extends by 6mm.

An intermediate housing may be provided between the tip end and the main body housing, and where the intermediate housing is provided, the tip end extends away from the intermediate housing rather than the main body housing. The intermediate housing may be provided with a tapered surface and may be provided with a cap engagement means.

A cap may be provided with a cavity of sufficient volume to accommodate a releasably connectable head connected to the drive shaft of the device therein and said cap may be sized engage with the cap engagement means of the intermediate housing to releasably secure the cap to the device.

The device may be provided with a sliding switch to permit a user to select the operating parameters of the apparatus. The sliding switch may have two positions defining "on" and "off". Preferably the sliding switch is provided with more than two positions, a first position defining "off" and other positions being "on" at differing speeds to allow a user to define the preferred frequency of movement for the particular action they wish to impart to their nail, such as filing, buffering or polishing.

Preferably the entirety of the sliding switch when in an "off" position is located within the boundaries defined by a perimeter of the main body housing and when the switch is in the one or more "on" positions at least a portion of the switch is located over the intermediate housing and/or the tip end of the housing. In this preferred arrangement the cap may be configured to cause, during the operation of connecting the cap to the intermediate housing, the switch to move from an "on" position to an "off" position, thus improving the safety of the device and ensure the conservation of the power consumption of the device.

According to a second aspect of the present invention there is provided a releasably connectable head for releasable connection to an electrical nail polishing device wherein the electrical nail polishing device comprises: a main body housing accommodating a power source electrically connected to a motor with a rotating shaft connected to a transmission gearing mechanism connected to a proximal end of a drive shaft, the transmission gearing mechanism is configured to convert the rotational motion of the rotating shaft into oscillating longitudinal movement of the drive shaft, the remote end of the drive shaft extends beyond a tip end of the housing, the tip end of the housing is configured to extend away from the main body housing by at least 2mm to provide a face surface with a flat side at or adjacent a diameter line of the main body housing with the ends of the flat side being joined by a curved side having one or more radii;
and wherein the releasably connectable head comprises: a landing plate which has one side provided with a nail contact material and the other side of the landing plate is provided with a head housing inboard of the periphery of the landing plate, the head housing is closed at a top end and open at a base end and is provided with a cavity that accepts the remote end of the drive shaft and the tip end of the housing therein and wherein the cavity corresponds to the shape of the tip end, within the cavity a socket is provided that is configured to releasably connect to the drive shaft, and wherein a landing plane is provided at the base end of the landing plate by the cavity end of the head housing being located at least 2mm inboard from the base end of the landing plate.

Preferably the landing plane extends beyond the cavity end of the head housing from between 2mm - 10mm, and more preferably extends from between 2mm - 7mm, and even more preferably extends from between 3mm - 6mm, and most preferably extends by 5mm.

The head housing of the releasably connectable head is provided with a cavity that accepts the remote end of the drive shaft and the tip end of the housing therein and corresponds to the shape of the tip end wherein the clearance between an interior of the cavity and the tip end of the polishing device is between 1mm - 5mm, and preferably between 1mm - 3mm, and most preferably between 1mm - 2mm.

The landing plate is preferably curved at its top end to facilitate more precise nail polishing.

The nail contact material preferably completely fills the surface area of the landing plate. The nail contact material may be a material that is suitable for imparting one of the following effects, namely; filing; buffing; or polishing.

The present invention will now be further described with reference to the accompanying drawings in which:
Figure 1 illustrates an end on view of the tip end of a nail polishing device according to the present invention;
Figure 2 illustrates a perspective view of a nail polishing device according to the present invention;
Figure 3 illustrates a perspective view of a nail polishing apparatus according to the present invention;
Figure 4 illustrates a side view of a nail polishing apparatus according to the present invention;
Figure 5 illustrates a plan view of a nail polishing apparatus according to the present invention;
Figure 6 illustrates a perspective view of a releasably connectable head apparatus according to the present invention; and
Figure 7 illustrates a side view of a releasably connectable head apparatus according to the present invention.

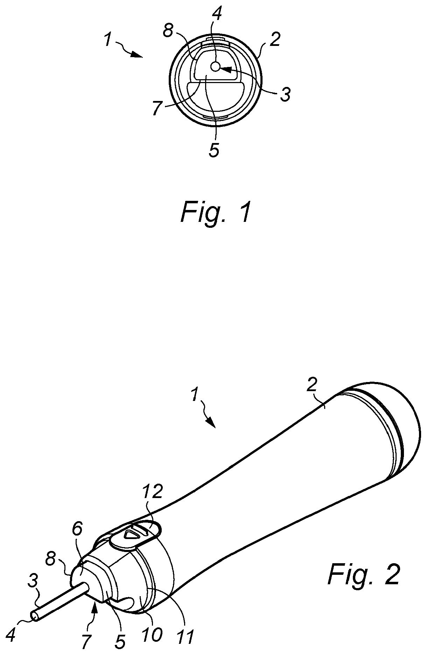

Referring to Figs 1&2, an electrical nail polishing device 1 is shown. The device 1 has a main body housing 2 which is sized to accommodate a power source (not shown) such as one or more batteries, the power source is electrically connected to a motor (not shown). The motor is provided with a rotating shaft (not shown) connected to a transmission gearing mechanism (not shown) which is configured to drive a proximal end of a drive shaft 3. The transmission gearing mechanism is configured, in use, to convert the rotational motion of the rotating shaft into oscillating longitudinal movement of the drive shaft 3, the remote end 4 of the drive shaft 3 extends beyond a tip end 5 of the housing 2, the tip end 5 of the housing is configured to extend away from the main body housing 2 by at least 2mm to provide a face surface 6 with a flat side 7 at or adjacent a diameter line of the main body housing 2 with the ends of the flat side 7 being joined by a curved side 8 having one or more radii. An intermediate housing 9 is provided between the tip end 5 and the main body housing 2.

The tip end 5 of the housing of the device preferably extends from the intermediate housing 9 by between 2mm - 10mm, and in Fig.2 the tip end 5 is shown as extending by about 6mm.

The intermediate housing 9 is provided with a tapered surface 10 and is shown with a cap engagement means 11 at the border with the main body housing. A cap (not shown) may be provided sized to engage with the cap engagement means 11 of the intermediate housing 9 to releasably secure the cap to the device 1.

A sliding switch 12 is provided to permit a user to select the operating parameters of the device 1, the sliding switch 12 may have two positions defining "on" and "off" but preferably is provided with more than two positions, a first position defining "off" and other positions being "on" at differing speeds to allow a user to define the preferred frequency of movement for the particular action they wish to impart to their nail, such as filing, buffering or polishing, in use.

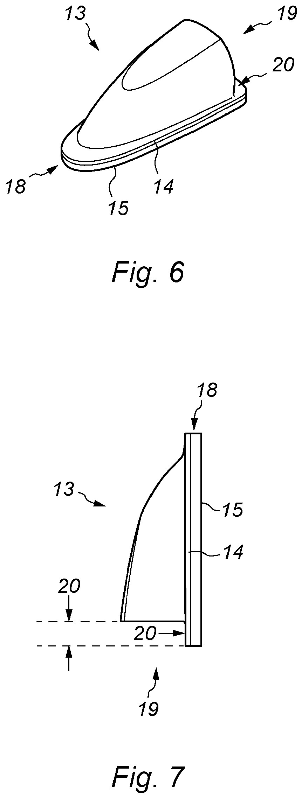

Turning to Figs. 6&7, a releasably connectable head 13 is illustrated. The head 13 has a landing plate 14 which has one side provided with a nail contact material 15 and the other side of the landing plate 14 is provided with a head housing inboard of the periphery of the landing plate 14. The head housing is closed at a top end 18 and open at a base end 19 and is provided with a cavity (not shown) that accepts the remote end of the drive shaft 4 tip end 5 of the housing therein and the cavity corresponds to the shape of the tip end 5. Within the cavity a socket (not shown) is provided that is configured to releasably connect to the remote end of the drive shaft 4.

A landing plane 20 is provided at the base end 19 of the landing plate 14 by the cavity end of the head housing being located at least 2mm inboard from the base end 19 of the landing plate 14.

The landing plane 20 extends beyond the cavity end of the head housing from between 2mm - 10mm, and is shown in Figs. 6&7 to extend by about 5mm.

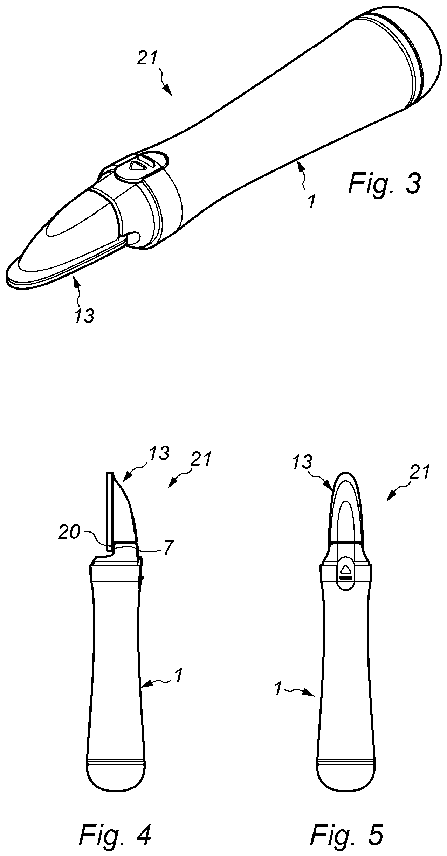

The cavity accepts the remote end of the drive shaft 4 and the tip end 5 of the housing therein and corresponds to the shape of the tip end wherein the clearance between an interior of the cavity and the tip end 5 is between 1mm - 5mm, and shown in Figs. 3-5 as between about 1mm - 2mm.

The landing plate 14 is curved at its top end 18 to facilitate more precise nail polishing.

The nail contact material 15 completely fills the surface area of the landing plate 14. The nail contact material 15 may be a material that is suitable for imparting one of the following effects, namely; filing; buffing; or polishing.

Turning to Figs.3-5 an electrical nail polishing apparatus 21 is shown comprising an electrical nail polishing device 1 with a releasably connectable head 13 releasably connected thereto. As can be seen, the releasably connectable head 13 can only be attached to the remote end of the drive shaft 4 of the polishing device 2 in a single orientation. The single orientation is facilitated by the landing plane 20 of the landing plate 14 which extends by at least 2mm from the head housing at the base 19 of the landing plate. To correctly orientate and connect the releasably connectable head 13 to the polishing device 2 a user will push the head 13 such that the cavity swallows the drive shaft 4 and surrounds the tip end 5 of the device housing such that the landing plane 20 is adjacent to the flat side 7 of the of the tip end 5 which in turn will permit the cavity to accommodate the tip 5 by virtue of its corresponding shape. In contrast, if a user did not correctly orientate the releasably connectable head 13 to the tip end 5 of the polishing device prior to connection the landing plane 20 will abut a part of the tip end 5 of the device and prevent connection therebetween.

## Claims

1. An electrical nail polishing apparatus comprising an electrical nail polishing device (1) and a plurality of releasably connectable heads (13), wherein the electrical nail polishing device comprises: a main body housing (2) accommodating a power source electrically connected to a motor with a rotating shaft connected to a transmission gearing mechanism connected to a proximal end of a drive shaft (3), the transmission gearing mechanism is configured to convert the rotational motion of the rotating shaft into oscillating longitudinal movement of the drive shaft, the remote end of the drive shaft extends beyond a tip end (5) of the housing, the tip end of the housing is configured to extend away from the main body housing by at least 2mm to provide a face surface (6) with a flat side (7) at or adjacent a diameter line of the main body housing (2) with the ends of the flat side being joined by a curved side (8) having one or more radii; and wherein the releasably connectable head (13) comprises: a landing plate (14) which has one side provided with a nail contact material (15) and the other side of the landing plate is provided with a head housing inboard of the periphery of the landing plate, the head housing is closed at a top end (18) and open at a base end (19) and is provided with a cavity that accepts the remote end of the drive shaft and the tip end of the housing therein and wherein the cavity corresponds to the shape of the tip end, within the cavity a socket is provided that is configured to releasably connect to the drive shaft, and wherein a landing plane (20) is provided at the base end of the landing plate by the cavity end of the head housing being located at least 2mm inboard from the base end (19) of the landing plate (14).

2. An electrical nail polishing apparatus according to claim 1, wherein the landing plane (20) extends beyond the cavity end of the head housing from between 2mm - 10mm, and more preferably extends from between 2mm - 7mm, and even more preferably extends from between 3mm - 6mm, and most preferably extends by 5mm.

3. An electrical nail polishing apparatus according to claim 1 or claim 2, wherein the clearance between an interior of the cavity and the tip end of the polishing device is between 1mm - 5mm, and preferably between 1mm - 3mm, and most preferably between 1mm - 2mm.

4. An electrical nail polishing apparatus according to any preceding claim, wherein the nail contact material (15) completely fills the surface area of the landing plate(14).

5. An electrical nail polishing apparatus according to any preceding claim, wherein the nail contact material (15) is a material that is suitable for imparting one of the following effects, namely; filing; buffing; or polishing.

6. An electrical nail polishing apparatus according to any preceding claim, wherein the drive shaft (3) protruding from the tip end of the housing is provided with a collar, said collar being configured for releasable connection with the socket of the head housing, said releasable connection providing an audible click.

7. An electrical nail polishing apparatus according to any of claims 1-5, wherein the drive shaft (3) is provided with a notch removed therefrom and the socket of the head housing is configured for releasable connection with the notch, said releasable connection providing an audible click.

8. An electrical nail polishing apparatus according to any preceding claim, wherein the tip end (5) of the housing of the device extends from the main body housing (2) by between 2mm - 10mm, and more preferably extends by between 2mm - 7mm, and even more preferably extends by between 3mm - 6mm, and most preferably extends by 6mm.

9. An electrical nail polishing apparatus according to any preceding claim, wherein an intermediate housing is provided between the tip end (5) and the main body housing (2), and where the intermediate housing is provided, the tip end extends away from the intermediate housing rather than the main body housing and the intermediate housing is provided with a tapered surface and provided with a cap engagement means.

10. An electrical nail polishing apparatus according to claim 9, wherein a cap is provided with a cavity of sufficient volume to accommodate a releasably connectable head connected to the drive shaft of the device therein and said cap is sized to engage with the cap engagement means of the intermediate housing to releasably secure the cap to the device.

11. A releasably connectable head (13) for releasable connection to an electrical nail polishing device (1) wherein the electrical nail polishing device comprises: a main body housing (2) accommodating a power source electrically connected to a motor with a rotating shaft connected to a transmission gearing mechanism connected to a proximal end of a drive shaft (3), the transmission gearing mechanism is configured to convert the rotational motion of the rotating shaft into oscillating longitudinal movement of the drive shaft, the remote end of the drive shaft extends beyond a tip end (5) of the housing, the tip end of the housing is configured to extend away from the main body housing by at least 2mm to provide a face surface (6) with a flat side (7) at or adjacent a diameter line of the main body housing with the ends of the flat side being joined by a curved side (8) having one or more radii; and wherein the releasably connectable head (13) comprises: a landing plate (14) which has one side provided with a nail contact material (15) and the other side of the landing plate is provided with a head housing inboard of the periphery of the landing plate, the head housing is closed at a top end (18) and open at a base end (19) and is provided with a cavity that accepts the remote end of the drive shaft and the tip end of the housing therein and wherein the cavity corresponds to the shape of the tip end, within the cavity a socket is provided that is configured to releasably connect to the drive shaft, and wherein a landing plane (20) is provided at the base end (19) of the landing plate by the cavity end of the head housing being located at least 2mm inboard from the base end of the landing plate (14).

12. A releasably connectable head according to claim 11, wherein the landing plane (20) extends beyond the cavity end of the head housing from between 2mm - 10mm, and more preferably extends from between 2mm - 7mm, and even more preferably extends from between 3mm - 6mm, and most preferably extends by 5mm.

13. A releasably connectable head according to claim 11 or claim 12, wherein the clearance between an interior of the cavity and the tip end of the polishing device is between 1mm - 5mm, and preferably between 1mm - 3mm, and most preferably between 1mm - 2mm.

14. A releasably connectable head according to any of claims 11-13, wherein the landing plate (14) is curved at its top end to facilitate more precise nail polishing.

15. A releasably connectable head according to any of claims 11-14, wherein the nail contact material (15) completely fills the surface area of the landing plate (14); and/or wherein the nail contact material is a material that is suitable for imparting one of the following effects, namely; filing; buffing; or polishing.

## Patentansprüche

1. Elektrische Nagelpoliervorrichtung, umfassend eine elektrische Nagelpoliereinrichtung (1) und eine Vielzahl lösbar verbindbarer Köpfe (13),
wobei die elektrische Nagelpoliereinrichtung umfasst: ein Hauptkörpergehäuse (2), das eine Stromversorgungsquelle aufnimmt, die elektrisch mit einem Motor verbunden ist, wobei eine Drehwelle mit einem Übertragungsgetriebemechanismus verbunden ist, der mit einem proximalen Ende einer Antriebswelle (3) verbunden ist, wobei der Übertragungsgetriebemechanismus ausgelegt ist, um die Drehbewegung der Drehwelle in eine oszillierende Längsbewegung der Antriebswelle umzuwandeln, wobei sich das entfernte Ende der Antriebswelle über ein Spitzenende (5) des Gehäuses hinaus erstreckt, wobei das Spitzenende des Gehäuses ausgelegt ist, um sich vom Hauptkörpergehäuse um mindestens 2 mm zu erstrecken, um eine Stirnfläche (6) mit einer flachen Seite (7) an oder neben einer Durchmesserlinie des Hauptkörpergehäuses (2) bereitzustellen, wobei die Enden der flachen Seite durch eine gekrümmte Seite (8) verbunden sind, die einen oder mehrere Radien aufweist;
und wobei der lösbar verbindbare Kopf (13) umfasst: eine Auflageplatte (14), deren eine Seite mit einem Nagelkontaktmaterial (15) und die andere Seite der Auflageplatte mit einem Kopfgehäuse innerhalb des Umfangs der Auflageplatte versehen ist, wobei das Kopfgehäuse an einem oberen Ende (18) geschlossen und an einem unteren Ende (19) offen und mit einem Hohlraum versehen ist, der das entfernte Ende der Antriebswelle und das Spitzenende des Gehäuses darin aufnimmt, und wobei der Hohlraum der Form des Spitzenendes entspricht, wobei innerhalb des Hohlraums eine Buchse bereitgestellt ist, die ausgelegt ist, um lösbar mit der Antriebswelle verbunden zu sein, und wobei durch das Hohlraumende des Kopfgehäuses, das mindestens 2 mm innerhalb des unteren Ende (19) der Auflageplatte (14) angeordnet ist, eine Auflageebene (20) am unteren Ende der Auflageplatte bereitgestellt ist.

2. Elektrische Nagelpoliervorrichtung nach Anspruch 1, wobei sich die Auflageebene (20) zwischen 2 mm und 10 mm über das Hohlraumende des Kopfgehäuses hinaus erstreckt und sich bevorzugter vonzwischen 2 mm und 7 mm erstreckt und sich noch bevorzugter von zwischen 3 mm und 6 mm erstreckt und sich am bevorzugtesten um 5 mm erstreckt.

3. Elektrische Nagelpoliervorrichtung nach Anspruch 1 oder Anspruch 2, wobei der Abstand zwischen einem Inneren des Hohlraums und dem Spitzenende der Poliereinrichtung zwischen 1 mm und 5 mm und vorzugsweise zwischen 1 mm und 3 mm und am bevorzugtesten zwischen 1 mm und 2 mm beträgt.

4. Elektrische Nagelpoliervorrichtung nach einem der vorhergehenden Ansprüche, wobei das Nagelkontaktmaterial (15) den Oberflächenbereich der Auflageplatte (14) vollständig ausfüllt.

5. Elektrische Nagelpoliervorrichtung nach einem der vorhergehenden Ansprüche, wobei das Nagelkontaktmaterial (15) ein Material ist, das geeignet ist, um einen der folgenden Effekte zu erzielen: Feilen, Schleifen oder Polieren.

6. Elektrische Nagelpoliervorrichtung nach einem der vorhergehenden Ansprüche, wobei die vom Spitzenende des Gehäuses hervorstehende Antriebswelle (3) mit einen Kragen versehen ist, wobei der Kragen zur lösbaren Verbindung mit der Buchse des Kopfgehäuses ausgelegt ist, wobei die lösbare Verbindung einen hörbaren Klick bereitstellt.

7. Elektrische Nagelpoliervorrichtung nach einem der Ansprüche 1 - 5, wobei die Antriebswelle (3) mit einer davon entfernten Kerbe versehen ist und die Buchse des Kopfgehäuses zur lösbaren Verbindung mit der Kerbe ausgelegt ist, wobei die lösbare Verbindung einen hörbarem Klick bereitstellt.

8. Elektrische Nagelpoliervorrichtung nach einem der vorhergehenden Ansprüche, wobei sich das Spitzenende (5) des Gehäuses der Einrichtung um zwischen 2 mm und 10 mm vom Hauptkörpergehäuse (2) erstreckt und sich bevorzugter um zwischen 2 mm und 7 mm erstreckt und sich noch bevorzugter um zwischen 3 mm und 6 mm erstreckt und sich am bevorzugtesten um 6 mm erstreckt.

9. Elektrische Nagelpoliervorrichtung nach einem der vorhergehenden Ansprüche, wobei ein Zwischengehäuse zwischen dem Spitzenende (5) und dem Hauptkörpergehäuse (2) bereitgestellt ist und dort, wo das Zwischengehäuse bereitgestellt ist, sich das Spitzenende vom Zwischengehäuse anstelle des Hauptkörpergehäuses erstreckt und das Zwischengehäuse mit einer sich verjüngenden Oberfläche und einem Kappeneingriffsmittel bereitgestellt ist.

10. Elektrische Nagelpoliervorrichtung nach Anspruch 9, wobei eine Kappe mit einem Hohlraum von ausreichendem Volumen bereitgestellt ist, um einen lösbar verbindbaren Kopf aufzunehmen, der mit der Antriebswelle der Einrichtung darin verbunden ist und die Kappe so bemessen ist, dass sie mit dem Kappeneingriffsmittel des Zwischengehäuses in Eingriff gelangt, um die Kappe lösbar an der Einrichtung zu befestigen.

11. Lösbar verbindbarer Kopf (13) zur lösbaren Verbindung mit einer elektrischen Nagelpoliereinrichtung (1), wobei die elektrische Nagelpoliereinrichtung umfasst: ein Hauptkörpergehäuse (2), das eine Stromversorgungsquelle aufnimmt, die elektrisch mit einem Motor verbunden ist, wobei eine Drehwelle mit einem Übertragungsgetriebemechanismus verbunden ist, der mit einem proximalen Ende einer Antriebswelle (3) verbunden ist, wobei der Übertragungsgetriebemechanismus ausgelegt ist, um die Drehbewegung der Drehwelle in eine oszillierende Längsbewegung der Antriebswelle umzuwandeln, wobei sich das entfernte Ende der Antriebswelle über ein Spitzenende (5) des Gehäuses hinaus erstreckt, wobei das Spitzenende des Gehäuses ausgelegt ist, um sich vom Hauptkörpergehäuse um mindestens 2 mm zu erstrecken, um eine Stirnfläche (6) mit einer flachen Seite (7) an oder neben einer Durchmesserlinie des Hauptkörpergehäuses bereitzustellen, wobei die Enden der flachen Seite durch eine gekrümmte Seite (8) verbunden sind, die einen oder mehrere Radien aufweist;
und wobei der lösbar verbindbare Kopf (13) umfasst: eine Auflageplatte (14), deren eine Seite mit einem Nagelkontaktmaterial (15) und die andere Seite der Auflageplatte mit einem Kopfgehäuse innerhalb des Umfangs der Auflageplatte versehen ist, wobei das Kopfgehäuse an einem oberen Ende (18) geschlossen und an einem unteren Ende (19) offen und mit einem Hohlraum versehen ist, der das entfernte Ende der Antriebswelle und das Spitzenende des Gehäuses darin aufnimmt, und wobei der Hohlraum der Form des Spitzenendes entspricht, wobei innerhalb des Hohlraums eine Buchse bereitgestellt ist, die ausgelegt ist, um lösbar mit der Antriebswelle verbunden zu sein, und wobei durch das Hohlraumende des Kopfgehäuses, das mindestens 2 mm innerhalb des unteren Ende (19) der Auflageplatte (14) angeordnet ist, eine Auflageebene (20) am unteren Ende der Auflageplatte bereitgestellt ist.

12. Lösbar verbindbarer Kopf nach Anspruch 11, wobei sich die Auflageebene (20) von zwischen 2 mm und 10 mm über das Hohlraumende des Kopfgehäuses hinaus erstreckt und sich bevorzugter von zwischen 2 mm und 7 mm erstreckt und sich noch bevorzugter zwischen 3 mm und 6 mm erstreckt und sich am bevorzugtesten um 5 mm erstreckt.

13. Lösbar verbindbarer Kopf nach Anspruch 11 oder Anspruch 12, wobei der Abstand zwischen einem Inneren des Hohlraums und dem Spitzenende der Poliereinrichtung zwischen 1 mm und 5 mm und vorzugsweise zwischen 1 mm und 3 mm und am bevorzugtesten zwischen 1 mm und 2 mm beträgt.

14. Lösbar verbindbarer Kopf nach einem der Ansprüche 11 - 13, wobei die Auflageplatte (14) an ihrem oberen Ende gekrümmt ist, um ein präziseres Nagelpolieren zu erleichtern.

15. Lösbar verbindbarer Kopf nach einem der Ansprüche 11 - 14, wobei das Nagelkontaktmaterial (15) den Oberflächenbereich der Auflageplatte (14) vollständig ausfüllt; und/oder
wobei das Nagelkontaktmaterial ein Material ist, das geeignet ist, um einen der folgenden Effekte zu erzielen: Feilen, Schleifen oder Polieren.

## Revendications

1. Appareil de polissage d'ongle électrique comprenant un dispositif de polissage d'ongle électrique (1) et une pluralité de têtes (13) pouvant être reliées amovible,
le dispositif de polissage d'ongle électrique comprenant : un boîtier de corps principal (2) recevant une source d'alimentation électriquement connectée à un moteur ayant un arbre rotatif connecté à un mécanisme d'engrenage de transmission connecté à une extrémité proximale d'un arbre d'entraînement (3), le mécanisme d'engrenage de transmission étant conçu pour convertir le mouvement de rotation de l'arbre rotatif en un mouvement longitudinal oscillant de l'arbre d'entraînement, l'extrémité distante de l'arbre d'entraînement s'étendant au-delà d'une extrémité de pointe (5) du boîtier, l'extrémité de pointe du boîtier étant conçue pour s'étendre à partir du boîtier de corps principal d'au moins 2 mm pour former une surface frontale (6) ayant un côté plat (7) au niveau ou à proximité immédiate d'une ligne de diamètre du boîtier de corps principal (2), les extrémités du côté plat étant reliées par un côté incurvé (8) ayant un ou plusieurs rayons ;
et la tête (13) pouvant être reliée amovible comprenant : une plaque de réception (14) qui a un côté pourvu d'un matériau de contact d'ongle (15) et l'autre côté de la plaque de réception est pourvue d'un boîtier de tête à l'intérieur de la périphérie de la plaque de réception, le boîtier de tête étant fermée au niveau d'une extrémité supérieure (18) et ouvert au niveau d'une extrémité de base (19) et est pourvu d'une cavité recevant l'extrémité distante de l'arbre d'entraînement et la pointe d'extrémité en son sein et la cavité correspondant ainsi à la forme de l'extrémité de pointe, une prise est disposée dans la cavité et est conçue pour se connecter amovible à l'arbre d'entraînement et un plan de réception (20) est ménagé à l'extrémité de base de la plaque de réception par l'extrémité de cavité du boîtier de tête se trouvant à au moins 2 mm à l'intérieur de l'extrémité de base (19) de la plaque de réception (14).

2. Appareil de polissage d'ongle électrique selon la revendication 1, le plan de réception (20) s'étendant au-delà de l'extrémité de cavité du boîtier de tête, de 2 mm à 10 mm, et de préférence encore de 2 mm à 7 mm, et mieux encore de 3 mm à 6 mm, et idéalement, il s'étend de 5 mm.

3. Appareil de polissage d'ongle électrique selon la revendication 1 ou la revendication 2, le jeu entre un intérieur de la cavité et l'extrémité de pointe du dispositif de polissage étant compris entre 1 mm et 5 mm et de préférence entre 1 mm et 3 mm et, idéalement, entre 1 mm et 2 mm.

4. Appareil de polissage d'ongle électrique selon l'une quelconque des revendications précédentes, le matériau de contact d'ongle (15) remplissant complètement la surface de la plaque de réception (14).

5. Appareil de polissage d'ongle électrique selon l'une quelconque des revendications précédentes, le matériau de contact d'ongle (15) étant un matériau qui convient pour conférer l'un des effets suivants, à savoir : ponçage ; lustrage ; ou polissage.

6. Appareil de polissage d'ongle électrique selon l'une quelconque des revendications précédentes, l'arbre d'entraînement (3) faisant saillie à partir de l'extrémité de pointe du boîtier étant pourvu d'un collier, ledit collier étant conçu pour une connexion amovible à la prise du boîtier de tête, ladite connexion amovible produisant un clic audible.

7. Appareil de polissage d'ongle électrique selon l'une quelconque des revendications 1 à 5, l'arbre d'entraînement (3) étant pourvu d'une encoche retirée de celui-ci et la prise du boîtier de tête est conçue pour une connexion amovible avec l'encoche, ladite connexion produisant un clic audible.

8. Appareil de polissage d'ongle électrique selon l'une quelconque des revendications précédentes, l'extrémité de pointe (5) du boîtier du dispositif s'étendant à partir du boîtier de corps principal (2) sur une distance comprise entre 2 mm et 10 mm, et de préférence entre 2 mm et 7 mm, et de préférence encore entre 3 mm et 6 mm et, idéalement, il s'étend de 6 mm.

9. Appareil de polissage d'ongle électrique selon l'une quelconque des revendications précédentes, un boîtier intermédiaire étant prévu entre l'extrémité de pointe (5) et le boîtier du corps principal (2) et, lorsqu'il existe un boîtier intermédiaire, l'extrémité de pointe s'étendant à partir du boîtier intermédiaire plutôt qu' partir du boîtier de corps principal et le boîtier intermédiaire étant pourvu d'une surface effilée et d'un moyen de mise en prise de capuchon.

10. Appareil de polissage d'ongle électrique selon la revendication 9, un capuchon étant pourvu d'une cavité d'un volume suffisant pour recevoir une tête pouvant être reliée amovible, reliée à l'arbre d'entraînement du dispositif en son sein et ledit capuchon étant dimensionné pour venir en prise avec le moyen de mise en prise du capuchon du boîtier intermédiaire pour fixer amovible le capuchon au dispositif.

11. Tête (13) pouvant être reliée amovible et destinée à être reliée amovible à un dispositif de polissage d'ongle électrique (1), le dispositif de polissage d'ongle électrique comprenant : un boîtier de corps principal (2) recevant une source d'alimentation raccordée électriquement à un moteur ayant un arbre rotatif connecté à un mécanisme d'engrenage de transmission connecté à une extrémité proximale d'un arbre d'entraînement (3), le mécanisme d'engrenage de transmission est conçu pour convertir le mouvement de rotation de l'arbre rotatif en un mouvement longitudinal oscillant de l'arbre d'entraînement, l'extrémité distante de l'arbre d'entraînement s'étendant au-delà d'une extrémité de pointe (5) du boîtier, l'extrémité de pointe du boîtier étant conçue pour s'étendre à partir du boîtier de corps principal sur une distance d'au moins 2 mm afin de fournir une surface frontale (6) ayant un côté plat (7) au niveau ou à proximité d'une ligne de diamètre du boîtier de corps principal, les extrémités du côté plat étant reliées par un côté incurvé (8) ayant un ou plusieurs rayons ;
et la tête (13) pouvant être reliée amovible comprenant : une plaque de réception (14) qui a un côté pourvu d'un matériau de contact d'ongle (15) et l'autre côté de la plaque de réception est pourvue d'un boîtier de tête à l'intérieur de la périphérie de la plaque de réception, le boîtier de tête étant fermé au niveau d'une extrémité supérieure (18) et ouvert au niveau d'une extrémité de base (19) et pourvu d'une cavité recevant l'extrémité distante de l'arbre d'entraînement et l'extrémité de pointe du boîtier en son sein et la cavité correspondant à la forme de l'extrémité de pointe, une prise étant disposée dans la cavité et étant conçue pour se connecter amovible à l'arbre d'entraînement et un plan de réception (20) étant ménagé à l'extrémité de base (19) de la plaque de réception par le fait que l'extrémité de cavité du logement de tête est située à au moins 2 mm à l'intérieur de l'extrémité de base de la plaque de réception (14).

12. Tête pouvant être reliée amovible selon la revendication 11, le plan de réception (20) s'étendant au-delà de l'extrémité de cavité du boîtier de tête de 2 mm à 10 mm, et de préférence de 2 mm à 7 mm, et de préférence encore de 3 mm à 6 mm et, idéalement, il s'étend de 5 mm.

13. Tête pouvant être reliée amovible selon la revendication 11 ou la revendication 12, le jeu entre un intérieur de la cavité et l'extrémité de pointe du dispositif de polissage étant compris entre 1 mm et 5 mm, et de préférence entre 1 mm et 3 mm et, idéalement, entre 1 mm et 2 mm.

14. Tête pouvant être reliée amovible selon l'une quelconque des revendications 11 à 13, la plaque de réception (14) étant incurvée à son extrémité supérieure pour faciliter un polissage d'ongle plus précis.

15. Tête pouvant être reliée amovible selon l'une quelconque des revendications 11 à 14, le matériau de contact d'ongle (15) remplissant complètement la surface de la plaque de réception (14) ; et/ou
le matériau de contact d'ongle étant un matériau qui convient pour conférer l'un des effets suivants, à savoir : ponçage ; lustrage ; ou polissage.
